# EUROPÄISCHE PATENTSCHRIFT

(11) **EP 1 322 401 B1**
(45) Veröffentlichungstag und Bekanntmachung des Hinweises auf die Patenterteilung: **08.08.2007**
(21) Anmeldenummer: 00956019.4
(22) Anmeldetag: 11.09.2000
(51) Int. Cl.: B01D 53/50, B01D 53/75, B01D 53/80

(54) **VERFAHREN ZUM REINIGEN VON RAUCHGASEN HINTER FEUERUNGSANLAGEN**
METHOD FOR CLEANING FLUE GASES FROM COMBUSTION INSTALLATIONS
PROCEDE D'EPURATION DES GAZ DE FUMEE PROVENANT D'UNE INSTALLATION DE COMBUSTION

(43) Veröffentlichungstag der Anmeldung: 02.07.2003
(73) Patentinhaber: ThyssenKrupp Xervon Energy GmbH, 47138 Duisburg (DE)
(72) Erfinder: Koch, Theodor, 8304 Wallisellen (CH)
(74) Vertreter: Stenger, Watzke & Ring
(86) Internationale Anmeldenummer: PCT/CH2000/000487
(87) Internationale Veröffentlichungsnummer: WO 2002/022238

(56) Entgegenhaltungen:
- DE-A- 3 419 068
- DE-A- 4 008 099
- DE-A- 4 436 660
- US-A- 5 575 982

## Beschreibung

Die vorliegende Erfindung betrifft ein Verfahren zum Reinigen von Rauchgasen hinter Feuerungsanlagen nach dem Oberbegriff von Anspruch 1 sowie eine Vorrichtung zur Durchführung des Verfahrens.

Rauchgase aus Feuerungsprozessen, wie sie beispielsweise bei Fossil-Kraftwerken, Müllverbrennungsanlagen, Holz- und Klärschlammverbrennungsanlagen sowie anderen Feuerungsanlagen anfallen, müssen vor dem Ausstossen in die Atmosphäre gereinigt werden, d.h. die im Rauchgas enthaltenen Bestandteile müssen bis auf bestimmte, von entsprechenden Stellen festgelegte Grenzwerte reduziert werden. Hierfür werden herkömmlicherweise neben nassen Reinigungsverfahren sehr häufig auch trockene oder quasitrockene Verfahren eingesetzt. Dabei werden die Rauchgase in der Regel mit Reaktionsmitteln und verschiedenen weiteren Beimischungen wie Aktivkohle und/oder anderen Additiven entweder in nasser Form oder in trockener Form in Berührung gebracht. Dies erfolgt beispielsweise durch Sprühabsorbtion oder im Flugstromverfahren. Die sauren Bestandteile des Rauchgases gehen dabei mit den Reaktionsmitteln chemische Verbindungen in Form von Salzen ein, welche in nachgeschalteten Filteranlagen abgeschieden werden. Ein entsprechendes Verfahren wird in DE-A- 4436660 offenbart. Als Filteranlagen kommen herkömmlich Elektro- und/oder Gewebefilter zum Einsatz. Dazu wirken die Aktivkohleanteile bei der Ausscheidung der im Rauchgas enthaltenen Schwermetalle mit, insbesondere für das Abreinigen von Quecksilber und polyzyklischen Kohlenwasserstoffe.

Bei herkömmlichen Reinigungsanlagen werden für die verschiedenen Verfahren resp. nachgeschalteten Reinigungsstufen jeweils frische, unverbrauchte Additive eingesetzt, welche nach dem jeweiligen Reinigungsprozess einer Verwertung oder Beseitigung zugeführt werden.

Die Aufgabe der vorliegenden Erfindung bestand darin, ein Reinigungsverfahren der oben beschrieben Art zu finden, welches den Einsatz der Additive optimiert resp. reduziert.

Diese Aufgabe wird erfindungsgemäss durch das Verfahren nach den Merkmalen von Anspruch 1 gelöst. Weitere, bevorzugte Ausführungsformen der Erfindung ergeben sich aus den Ansprüchen 2 bis 11.

Vorteilhaft werden im erfindungsgemässen Verfahren nicht jeder einzelnen Reinigungsstufe frische, neue Reaktionsmittel, vornehmlich Kalkhydrate, zugeführt, sondern in allen Stufen kommt dasselbe Reaktionsmittel zum Einsatz. Damit in allen Stufen eine entsprechende Reinigungswirkung sichergestellt werden kann, wird das frische, neue Reaktionsmittel nur der letzten Stufe zugeführt. Dort tritt das Reaktionsmittel zuerst mit dem bereits vorgereinigten und daher nur noch schwach belasteten Rauchgas in Kontakt. Damit wird zwar eine überstöchiometrische Dosierung erzielt, welche aber selbst bei grossen Emissionsspitzen, welche ggf. bis zu dieser letzten Stufe durchschlagen, eine gute Endreinigung gewährleisten. Da nun das hier eingesetzte Reaktionsmittel noch bei weitem nicht verbraucht ist, wird es der unmittelbar davor liegenden Reinigungsstufe beispielsweise über eine Rückführungsleitung zugeführt. Diese Reinigungsstufe kann sowohl trocken wie auch nass betrieben werden, d.h. es können beispielsweise alternativ das Flugstromverfahren oder die Sprühabsorption eingesetzt werden.

In dieser mittleren Reinigungsstufe wird die eigentliche hauptsächliche Reinigung des Abgases durchgeführt und eine grosse Schadstoffsenke mit entsprechender Schadstoffausscheidung erzielt. Der von der letzten Stufe noch unverbrauchte Reaktionsmittelanteil wird hier überwiegend für die Abscheidung von sauren Schadgasbestandteilen benutzt. Hierfür wird vorzugsweise ein Kalkhydrat eingesetzt.

Vorzugsweise können dem Reaktionsmittel am Begin jeder Stufe weitere Additive beigemischt werden, wie insbesondere beispielsweise Aktivkohle. Diese Aktivkohle trägt gerade in der mittleren Stufe wesentlich bei der Einbindung von Schwermetallen, wie beispielsweise Quecksilber, aber auch von Dioxinen und Furanen bei.

Auch das aus dieser Stufe austretende Reaktionsmittel weist immer noch reaktionsfähige Anteile auf. Daher wird das Material nochmals verwendet, und zwar in der ersten Stufe des Reinigungsprozesses, welcher in der Regel mit einem Grobstaubabscheider realisiert wird. An dieser Stelle, unmittelbar im Anschluss an die Feuerungsanlage, weisen die Rauchgase eine hohen Schadgasbelastung auf, und die noch reaktionsfähigen Anteile des Reaktionsmittels können an dieser Stelle nochmals ausgenutzt werden. Auch in dieser ersten Stufe wirkt das zusätzliche Additiv in Form von Aktivkohle auch im Flugstrom beispielsweise auf einem Gewebefilter zusätzlich bei der Einbindung von Schwermetallen und von polyzyklischen Kohlenwasserstoffen mit.

Durch das erfindungsgemässe Verfahren werden die eingesetzten Reaktionsmittel und ggf. Additive optimal eingesetzt und ausgenutzt. Durch den mehrfachen Einsatz gerade von Aktivkohleanteilen wird die Einbindung der Schwermetalle oder Dioxine und Furane im gesamten Reinigungsprozess optimiert und verbessert.

Vorzugsweise ist vorgesehen, jeweils in den einzelnen Stufen gezielt dosiert einzelne besondere Additive dem Reaktionsmittel beizugeben. Dies kann insbesondere bei aussergewöhnlichen Schadstoffemissionen von Nutzen sein, welche beispielsweise bei der Verbrennung von Brennstoffen mit an sich unzulässiger Beimengung von Schwermetallen wie Quecksilber auftreten können. Dies kann gerade bei Müllverbrennungsanlagen regelmässig vorkommen, welche nicht mit einem homogenen Brennstoff betrieben werden, sondern deren Zusammensetzung des Brennstoffes stark variieren kann.

Im Falle einer Störung oder extremen Abnutzung der Reaktionsmittel kann vorteilhaft vorgesehen sein, das Reaktionsmittel auf jeder Stufe unmittelbar in ein Reststoffsilo auszuschleusen und nicht mehr der davor liegenden Stufe zuzuführen. Dies kann beispielsweise auch in einem Störungsfall von nutzen sein.

Entsprechend den Anforderungen an die NOx-Reduktion kann zwischen der mittleren und letzten Stufe auch ein Katalysator zwischengeschaltet sein, welcher die NOx-Anteile im Rauchgas reduziert.

Erfindungsgemäss wird weiter eine Vorrichtung mit den Merkmalen nach Anspruch 12 zur Durchführung des Verfahrens vorgeschlagen. Der grundsätzlich Aufbau entspricht im wesentlichen einer herkömmlichen Reinigungsanlage, wobei hier nun zusätzlich die Rückführungsleitungen vorgesehen sind, um das Reaktionsmittel von der letzten Stufe bis zur ersten Stufe jeweils nach dem Ausschleusen aus einer Stufe weiterzuleiten.

Ein Ausführungsbeispiel der Erfindung wird nachfolgend anhand von Zeichnungen noch näher erläutert. Es zeigen
Fig. 1 das Schema eines erfindungsgemässen Rauchgasreinigungsprozesses;
Fig. 2 das Schema einer alternativen Ausführungsform eines erfindungsgemässen Rauchgasreinigungsprozesses.

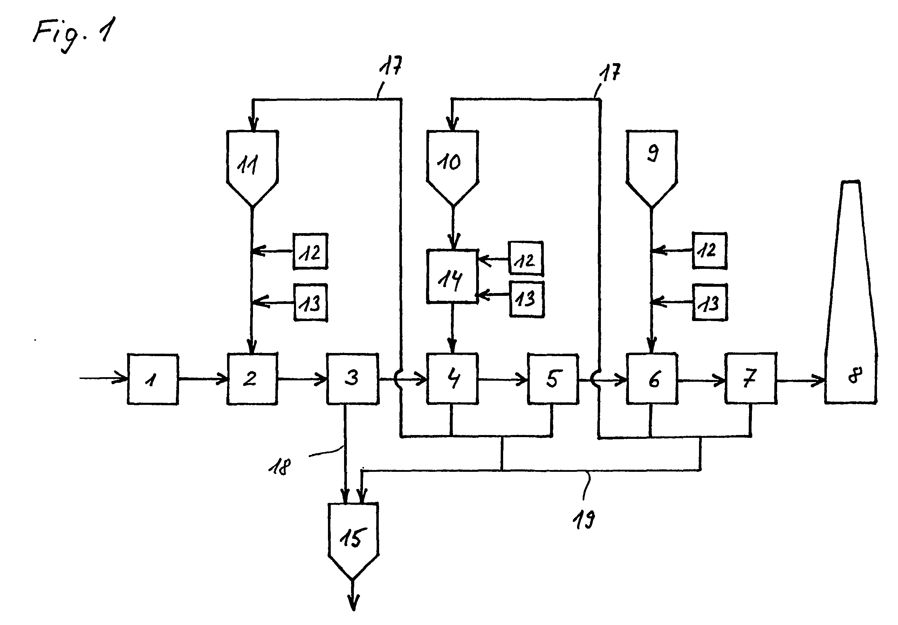

In Figur 1 ist schematisch der erfindungsgemässe Ablauf eines Reinigungsprozesses für Rauchgase dargestellt. In einer Feuerungsanlage 1 wird der ihr zugeführte Brennstoff verbrannt und dabei Rauchgas erzeugt. Das Rauchgas wird nun einer ersten Reinigungsstufe zugeführt, welche aus einem Mischer 2 und einem Grobstaubabscheider 3 besteht.

Der Mischer 2 kann beispielsweise im Flugstromverfahren betrieben werden, wo dem Rauchgas Reaktionsmittel trocken beigemischt werden. Das mit dem Reaktionsmittel vermischte, eine hohe Schadbelastung aufweisende Rauchgas wird anschliessend durch den Grobstaubabscheider 3 geführt, in welchem das Reaktionsmittel ausgeschieden und über eine Ableitung 18 einem Reststoffsilo 15 zugeführt wird. Das Reaktionsmittel ist an diesem Standort praktisch vollständig verbraucht.

Als Reaktionsmittel werden vornehmlich Kalkhydrate eingesetzt, welche die sauren Bestandteile des Rauchgases an sich binden resp. damit reagieren und ein Salz bilden, welches im Grobstaubabscheider 3, beispielsweise einem Gewebefilter, Elektrofilter oder Zyklon, aufgefangen wird und abgeführt werden kann.

Das nun grob gereinigte Rauchgas gelangt in die zweite Reinigungsstufe, welche aus einem Sprühabsorber 4 und einem nachgeschalteten Staubabscheider 5 besteht. Im Sprühabsorber 4 wird das Rauchgas im nassen Verfahren mit dem Reaktionsmittel in Kontakt gebracht, wobei wiederum die sauren Bestandteile nun praktisch vollständig mit dem Reaktionsmittel reagieren und hier oder im nachfolgenden Staubabscheider ausgeschieden werden können.

Das nun im wesentlichen gereinigte Rauchgas, welches in der Regel nur noch einen geringen Schadstoffanteil aufweist, wird nun der dritten und letzten Stufe des Reinigungsprozesses zugeführt. Hier gelangt das Rauchgas wiederum zuerst in einen Mischer oder Sprühabsorber 6, um anschliessend durch einen Feinstaubabscheider 7 hindurch einem Kamin 8 zugeführt zu werden.

Im Mischer oder Sprühabsorber 6 wird das Rauchgas nun erfindungsgemäss mit frischem, unverbrauchtem Reaktionsmittel in Kontakt gebracht, und zwar in einem überstöchiometrischen Verhältnis. Damit kann einerseits eine besonders gute Reinigungswirkung auch am nur noch gering belasteten Rauchgas erzielt werden, und andererseits können auch Belastungsspitzen, welche bis zu dieser Stufe durchschlagen könnten, dadurch aufgefangen werden und die geforderten maximalen Emissionswerte im Kamin 8 eingehalten werden.

Das Reaktionsmittel, vorzugsweise in Form von Kalkhydraten, wird in einem Silo 9 bereitgestellt und über eine Leitung dem Mischer oder Sprühabsorber 6 dosierbar zugeführt. Hier können gleichzeitig über separate Dosiervorrichtungen 12 und 13 beispielsweise Aktivkohle und weitere Additive beigefügt werden, um die gewünschte Reinigungswirkung des Rauchgases zu erzielen.

Die aus dem Mischer resp. Sprühabsorber 6 sowie dem Feinstaubabscheider 7 ausgeschiedenen Reaktionsmittel, welche wegen der überstöchimetrischen Dosierung bei weitem noch nicht vollständig verbraucht sind, werden nun über eine Rückführungsleitung 17 dem Silo 10 der zweiten Reinigungsstufe zugeführt, von wo aus das Reaktionsmittel wiederum dosiert dem Sprühabsorber 4 der zweiten Stufe zugeführt wird. Diesem Reaktionsmittel können nun nochmals bei Bedarf über Dosiervorrichtungen 12 und 13 weiter Aktivkohle und/oder weiterer Additive beigemischt werden. Vorzugsweise erfolgt dies in einem Suspensionsaufbereiter 14, welcher vor dem Sprühabsorber 4 angeordnet ist.

Diese zwar bereits teilweise verbrauchte, aber nach wie vor reaktionsfähige Reaktionsmittel wird hier, wie bereits beschrieben, mit dem Rauchgas in Kontakt gebracht.

Das in dieser Stufe ausgeschiedene Reaktionsmittel wird wiederum über eine Rückführungsleitung 17 dem Silo 11 der ersten Reinigungsstufe zugeführt. In dieser ersten Reinigungsstufe mit Mischer 2 und Grobstaubabscheider 3 wird das Rauchgas wie ebenfalls bereits beschrieben mit Hilfe des immer noch reaktive Anteile aufweisenden Reaktionsmittels in Kontakt gebracht. Auch in dieser Stufe ist vorgesehen, je nach Bedarf über Dosiervorrichtungen 12 und 13 Aktivkohle und/oder weitere Additive dem Reaktionsmittel beizumischen.

In den Rückführungsleitungen 17 der zweiten und letzten

Stufe ist eine Abzweigmöglichkeit, beispielsweise mittels eines Abzweigventils, vorgesehen, um das dortige Reaktionsmittel ggf. über die Ableitung 19 teilweise oder vollständig direkt dem Reststoffsilo 15 zuzuführen.

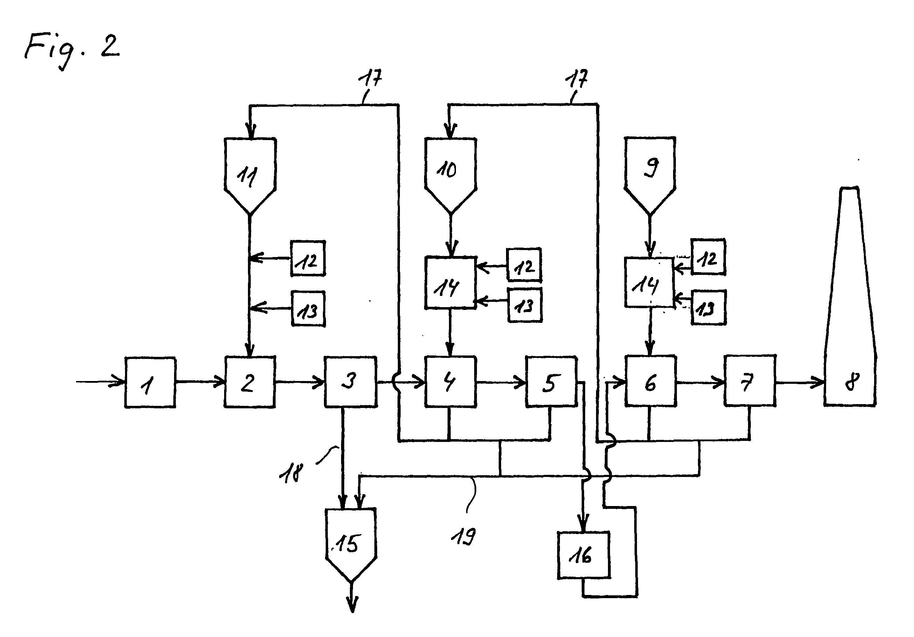

In Figur 2 ist ein alternativer Ablauf des erfindungsgemässen Verfahrens schematisch dargestellt. Der Grundablauf entspricht dem Ablauf nach Figur 1, mit dem Unterschied, dass zwischen der zweiten und der letzten Stufe, d.h. zwischen dem Staubabscheider 5 und dem Mischer oder Sprühabsorber 6 ein Katalysator 16 dazwischengeschaltet ist. Dieser kann insbesondere bei hohen Rauchgastemperaturen eingesetzt werden. Ebenfalls ist hier weiter ein Suspensionsaufbereiter 14 in der Zuleitung vom Silo 9 in den Sprühabsorber 6 dargestellt.

Als weitere Alternative kann der Staubabscheider 5 vorteilhaft zweiteilig ausgeführt sein, wobei in einem ersten Teil das in dieser Stufe zu Salz reagierte Reaktionsmittel direkt über eine Leitung vollständig in das Reststoffsilo 15 abgeführt wird und das in der zweiten, feineren Stufe ausgefilterte Reaktionsmittel in die Rückführungsleitung 17 eingespiesen und der ersten Reinigungsstufe zugeführt wird.

## Patentansprüche

1. Verfahren zum Reinigen von Rauchgasen hinter Feuerungsanlagen, wobei die Rauchgase in mehreren Stufen durch Mischer oder Sprühabsorber (2; 4; 6) mit nachgeschalteten Staubabscheidern (3;5;7) zum Kamin (8) geleitet werden, und dabei die Rauchgase in den Mischern oder Sprühabsorbern (2;4;6) mit Reaktionsmitteln in Berührung gebracht werden und die verbrauchten Reaktionsmittel in ein Reststoffsilo (15) abgeführt werden, **dadurch gekennzeichnet, dass** frische und unverbrauchte Reaktionsmittel in der letzten Stufe dem entsprechenden Mischer oder Sprühabsorber (6) zugeführt werden, wo sie anschliessend mindestens teilweise zusammen mit den im nachgeschalteten Staubabscheider (7) ausgeschiedenen Reaktionsmitteln der vorhergehenden Stufe in teilverbrauchtem Zustand über eine Rückführung (17) dem jeweiligen Mischer oder Sprühabsorber (4) zugeführt wird.

2. Verfahren nach Anspruch 1, **dadurch gekennzeichnet, dass** die Rückführung der verbrauchten Reaktionsmittel zu der jeweils vorgeschalteten Stufe bis zur ersten Stufe durchgeführt wird.

3. Verfahren nach Anspruch 1 oder 2, **dadurch gekennzeichnet, dass** zusätzlich zu den Reaktionsmitteln vor dem jeweiligen Mischer oder Sprühabsorber (2;4;6) Aktivkohle und/oder andere Additive beigefügt werden.

4. Verfahren nach Anspruch 3, **dadurch gekennzeichnet, dass** die Aktivkohle und/oder Additive in einer Suspensionsaufbereitung (14) mit den Reaktionsmitteln gemischt werden, bevor die Mischung dem Mischer oder Sprühabsorber (2;4;6) zugeführt wird.

5. Verfahren nach einem der Ansprüche 1 bis 4, **dadurch gekennzeichnet, dass** vor dem Eintritt der Rauchgase in den Mischer oder Sprühabsorber (6) der letzten Stufe diese Rauchgase durch einen Katalysator (16) hindurchgeleitet werden.

6. Verfahren nach einem der Ansprüche 1 bis 5, **dadurch gekennzeichnet, dass** jeweils vom Mischer oder Sprühabsorber (2;4;6) und nachgeschaltetem Staubabscheidern (3;5;7) abgeleitete, verbrauchte Reaktionsmittel einzelner oder aller Stufen wenigstens teilweise direkt aus der Rückführung (17) abgezweigt und dem Reststoffsilo (15) zugeführt werden.

7. Verfahren nach einem der Ansprüche 1 bis 6, **dadurch gekennzeichnet, dass** die im Mischer (2) der ersten Stufe mit dem Rauchgas vermischten Reaktionsmittel einem Grobstaubabscheider (3) zugeführt werden und anschliessend vollständig dem Reststoffsilo (15) zugeführt werden.

8. Verfahren nach einem der Ansprüche 1 bis 7, **dadurch gekennzeichnet, dass** die nachgeschalteten Staubabscheider (5) der zwischen der ersten und letzten Stufe angeordneten mittleren Stufe oder Stufen als zweiteilige Staubabscheider ausgeführt sind, wobei die im ersten Teil ausgeschiedenen Reaktionsmittel direkt dem Reststoffsilo (15) zugeführt werden, während die im zweiten Teil ausgeschiedenen Reaktionsmittel der Rückführung (17) zur vorhergehenden Stufe zugeführt werden.

9. Verfahren nach einem der Ansprüche 1 bis 8, **dadurch gekennzeichnet, dass** das Rauchgas durch drei Stufen mit Mischer oder Sprühabsorber (2;4;6) und nachgeschaltetem Staubabscheider (3,5,7) hindurchgeführt wird und anschliessend durch einen Kamin (8) ausgeblasen wird.

10. Verfahren nach einem der Ansprüche 1 bis 9, **dadurch gekennzeichnet, dass** als Reaktionsmittel vornehmlich Kalkhydrate eingesetzt werden.

11. Verfahren nach einem der Ansprüche 1 bis 10, **dadurch gekennzeichnet, dass** das frische Reaktionsmittel in der letzten Stufe in überstöchiometrischer Dosierung dem Rauchgas zugeführt wird.

12. Vorrichtung zur Durchführung des Verfahrens nach einem der Ansprüche 1 bis 11 mit mehreren nacheinandergeschalteten Reinigungsstufen, welche jeweils mindestens einen Mischer oder Sprühabsorber (2;4;6) mit nachgeschaltetem Filter aufweisen, sowie jeweils mit dem Mischer oder Sprühabsorber (2;4;6) verbundenen Adsorptionssilos (9;10;11) sowie mindestens einem Reststoffsilo (15), **dadurch gekennzeichnet, dass** jeweils die Adsorptionssilos (9;10) einer Stufe über eine Rückführungsleitung (17) mit dem Mischer oder Sprühabsorber (4;6) und Staubabscheider (5;7) der nachfolgenden Stufe verbunden ist und mindestens der Staubabscheider (3) der ersten Stufe direkt mit dem Reststoffsilo (15) verbunden ist.

## Claims

1. A method of cleaning flue gases from combustion installations, in which the flue gases are conducted to the chimney in a number of stages through mixers or spray absorbers (2; 4; 6) with downstream dust separators (3; 5; 7) and the flue gases are thereby brought into contact in the mixers or spray absorbers (2; 4; 6) with reaction agents and the used reaction agents are conducted away into a waste silo (15), **characterised in that** fresh and unused reaction agent is supplied in the last stage to the corresponding mixer or spray absorber (6), where it is subsequently supplied, at least partially, together with the reaction agent from the preceding stage removed in the downstream dust separator (7) in a partially used state to the respective mixer or spray absorber (4) via a recirculation path (17).

2. A method as claimed in Claim 1, **characterised in that** the recirculation of the used reaction agent to the respective preceding stage is performed to the first stage.

3. A method as claimed in Claim 1 or 2, **characterised in that** in addition to the reaction agents, activated charcoal and/or other additives are added before the respective mixer or spray absorber (2; 4; 6).

4. A method as claimed in Claim 3, **characterised in that** the activated charcoal and/or additives are mixed with the reaction agents in a suspension preparation vessel (14).

5. A method as claimed in one of Claims 1 to 4, **characterised in that** before the entry of the flue gases into the mixer or spray absorber (6) of the last stage, these flue gases are passed through a catalyst (16).

6. A method as claimed in one of Claims 1 to 5, **characterised in that** used reaction agent from individual or all stages conducted away from the mixer or spray absorber (2; 4; 6) and downstream dust separators (3; 5; 7) is tapped off, at least partially, directly from the recirculation path (17) and fed to the waste silo (15).

7. A method as claimed in one of Claim 1 to 6, **characterised in that** the reaction agent mixed with the flue gas in the mixer (2) of the first stage is fed to a coarse dust separator (3) and subsequently fed in its entirety to the waste silo (15).

8. A method as claimed in one of Claims 1 to 7, **characterised in that** the downstream dust separators (5) of the middle stage or stages arranged between the first and last stages are constructed in the form of two-part dust separators, whereby the reaction agent separated in the first part is fed directly to the waste silo (15) whilst the reaction agent separated in the second part is fed to the recirculation path (17) of the preceding stage.

9. A method as claimed in one of Claims 1 to 8, **characterised in that** the flue gas is passed through three stages with mixers or spray absorbers (2; 4; 6) and downstream dust separators (3; 5; 7) and is subsequently discharged through a chimney (8).

10. A method as claimed in one of Claims 1 to 9, **characterised in that** slaked lime is principally used as the reaction agent.

11. A method as claimed in one of Claims 1 to 10, **characterised in that** the fresh reaction agent in the last stage is supplied to the flue gas in a superstoichiometric proportion.

12. Apparatus for carrying out the method as claimed in one of Claims 1 to 11 including a plurality of cleaning stages connected in series, each of which has at least one mixer or spray absorber (2; 4; 6) with a downstream filter and a respective adsorption silo (9; 10; 11) connected to the mixer or spray absorber (2; 4; 6) and at least one waste silo (15), **characterised in that** the adsorption silo (9; 10) of one stage is connected via a recycling duct (17) to the mixer or spray absorber (4; 6) and dust separator (5; 7) of the subsequent stage and at least the dust separator 93) of the first stage is directly connected to the waste silo (15).

## Revendications

1. Procédé pour l'épuration de gaz de combustion en aval d'installations de combustion, dans lequel les gaz de combustion sont acheminés en plusieurs étapes à travers des mélangeurs ou des absorbeurs à pulvérisation (2 ; 4 ; 6) suivis de dépoussiéreurs (3 ; 5 ; 7) jusqu'à la cheminée (8), et les gaz de combustion sont mis en contact dans les mélangeurs ou absorbeurs à pulvérisation (2 ; 4 ; 6) avec des réactifs et les réactifs usagés sont évacués dans un silo à résidus (15), **caractérisé en ce que** des réactifs neufs et non usagés sont amenés dans la dernière étape au mélangeur ou absorbeur à pulvérisation (6) correspondant, où ils sont ensuite au moins partiellement amenés, avec les réactifs de l'étape précédente séparés dans le dépoussiéreur (7) monté en aval, dans un état partiellement usagé, au mélangeur ou absorbeur à pulvérisation (4) via une conduite de retour (17).

2. Procédé selon la revendication 1, **caractérisé en ce que** la conduite de retour des réactifs usagés retourne à chaque fois vers l'étape précédente jusqu'à la première étape.

3. Procédé selon la revendication 1 ou 2, **caractérisé en ce que**, outre les réactifs, du charbon actif et/ou d'autres additifs sont ajoutés avant chaque mélangeur ou absorbeur à pulvérisation (2 ; 4 ; 6).

4. Procédé selon la revendication 3, **caractérisé en ce que** le charbon actif et/ou les additifs sont mélangés avec les réactifs dans une préparation en suspension (14) avant que le mélange soit amené au mélangeur ou absorbeur à pulvérisation (2 ; 4 ; 6).

5. Procédé selon l'une des revendications 1 à 4, **caractérisé en ce qu'**avant l'entrée des gaz de combustion dans le mélangeur ou absorbeur à pulvérisation (6) de la dernière étape, ces gaz de combustion sont passés à travers un catalyseur (16).

6. Procédé selon l'une des revendications 1 à 5, **caractérisé en ce que** les réactifs usagés d'une étape ou de toutes les étapes provenant de chaque mélangeur ou absorbeur à pulvérisation (2 ; 4 ; 6) et du dépoussiéreur (3 ; 5 ; 7) monté en aval sont dérivés directement, au moins en partie, de la conduite de retour (17) et amenés au silo à résidus (15).

7. Procédé selon l'une des revendications 1 à 6, **caractérisé en ce que** les réactifs mélangés au gaz de combustion dans le mélangeur (2) de la première étape sont amenés à un séparateur de poussières à grosse granulométrie (3), puis entièrement amenés au silo à résidus (15).

8. Procédé selon l'une des revendications 1 à 7, **caractérisé en ce que** les dépoussiéreurs (5) montés en aval de l'étape ou des étapes intermédiaires disposées entre la première étape et la dernière sont construits comme des dépoussiéreurs en deux parties, dans lesquels les réactifs séparés dans la première partie sont directement amenés au silo à résidus (15), tandis que les réactifs séparés dans la deuxième partie sont ramenés à l'étape précédente par la conduite de retour (17).

9. Procédé selon l'une des revendications 1 à 8, **caractérisé en ce que** le gaz de combustion est passé par trois étapes avec mélangeur ou absorbeur à pulvérisation (2 ; 4 ; 6) suivi d'un dépoussiéreur (3 ; 5 ; 7) et éjecté ensuite par une cheminée (8).

10. Procédé selon l'une des revendications 1 à 9, **caractérisé en ce que** les réactifs employés sont de préférence des hydrates de chaux.

11. Procédé selon l'une des revendications 1 à 10, **caractérisé en ce que** le réactif neuf est amené dans le gaz de combustion dans la dernière étape en quantité dépassant les proportions stoechiométriques.

12. Dispositif pour la mise en oeuvre du procédé selon l'une des revendications 1 à 11 avec plusieurs étapes de purification successives, qui comportent chacune au moins un mélangeur ou absorbeur à pulvérisation (2 ; 4 ; 6) suivi d'un filtre, ainsi qu'avec des silos d'adsorption (9 ; 10 ; 11) reliés au mélangeur ou absorbeur à pulvérisation (2 ; 4 ; 6) et au moins un silo à résidus (15), **caractérisé en ce que** les silos d'adsorption (9 ; 10) de chaque étape sont reliés par une conduite de retour (17) au mélangeur ou absorbeur à pulvérisation (4 ; 6) et au dépoussiéreur (5 ; 7) de l'étape suivante et le dépoussiéreur (3) de la première étape au moins est directement relié au silo à résidus (15).
